# EUROPEAN PATENT SPECIFICATION

(11) **EP 4 531 475 B1**
(45) Date of publication and mention of the grant of the patent: **04.11.2026**
(21) Application number: 22949856.3
(22) Date of filing: 07.07.2022
(51) Int. Cl.: H04W 72/25, H04W 72/40, H04W 72/51, H04W 72/0453

(54) **WIRELESS COMMUNICATION METHOD, AND TERMINAL DEVICE AND NETWORK DEVICE**
DRAHTLOSKOMMUNIKATIONSVERFAHREN UND ENDGERÄTEVORRICHTUNG UND NETZWERKVORRICHTUNG
PROCÉDÉ DE COMMUNICATION SANS FIL, DISPOSITIF TERMINAL ET DISPOSITIF RÉSEAU

(43) Date of publication of application: 02.04.2025
(73) Proprietor: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN)
(74) Representative: RGTH
(86) International application number: PCT/CN2022/104475
(87) International publication number: WO 2024/007272

(56) References cited:
- WO-A1-2019/023857
- CN-A- 110 999 449
- CN-A- 111 757 291
- CN-A- 113 557 758
- CN-A- 113 727 440
- CN-A- 113 940 026
- US-A1- 2020 396 717
- US-A1- 2022 015 070

## Description

### TECHNICAL FIELD

This application relates to the field of communications technologies, and more specifically, to a wireless communication method, a terminal device, and a network device.

### BACKGROUND

In a scenario of sidelink communication, broadcast and multicast communication may be performed based on a carrier aggregation (carrier aggregation, CA) technology. A plurality of carriers (or at least two carriers) used for carrier aggregation are determined based on a mapping relationship between a carrier and a service type. However, this mapping relationship is fixed, and is not easy to change. In this manner of determining a carrier based on a fixed mapping relationship, a carrier selection process is not flexible. WO2019/023857A1 provides a method for carrying out wireless device-to-device communication, including a first user equipment transmitting a sidelink carrier aggregation configuration to a second user equipment (either directly or via a base station); and the first user equipment communicating directly with the second user equipment on a plurality of sidelink carriers in accordance with the sidelink carrier aggregation configuration. US2020/396717A1 provides techniques for sidelink operation. A method that may be performed by a first user equipment (UE) includes generating at least one first message indicating a request for resource allocation for sidelink communication between the first UE and a second UE, transmitting the at least one message indicating the request for the resource allocation, receiving at least one second message allocating one or more first component carriers for the sidelink communication, and communicating with the second UE using the one or more first component carriers.

### SUMMARY

This application provides a wireless communication method, a terminal device, and a network device. The invention is set out in the appended set of claims..

### BRIEF DESCRIPTION OF DRAWINGS

FIG. 1 is an example diagram of a system architecture of a wireless communications system to which embodiments of this application are applicable.
FIG. 2 is an example diagram of a scenario of sidelink communication within network coverage.
FIG. 3 is an example diagram of a scenario of sidelink communication with partial network coverage.
FIG. 4 is an example diagram of a scenario of sidelink communication out of network coverage.
FIG. 5 is an example diagram of a scenario of sidelink communication based on a central control node.
FIG. 6 is an example diagram of a broadcast-based sidelink communication manner.
FIG. 7 is an example diagram of a unicast-based sidelink communication manner.
FIG. 8 is an example diagram of a multicast-based sidelink communication manner.
FIG. 9 is a schematic flowchart of a wireless communication method according to an embodiment of this application.
FIG. 10 is a schematic flowchart of a wireless communication method according to an embodiment of this application.
FIG. 11 is a schematic flowchart of a wireless communication method according to another embodiment of this application.
FIG. 12 is a schematic diagram of a terminal device according to an embodiment of this application.
FIG. 13 is a schematic diagram of a terminal device according to another embodiment of this application.
FIG. 14 is a schematic diagram of a network device according to an embodiment of this application.
FIG. 15 is a schematic diagram of a structure of a communications apparatus according to an embodiment of this application.

### DESCRIPTION OF EMBODIMENTS

### Communications system architecture

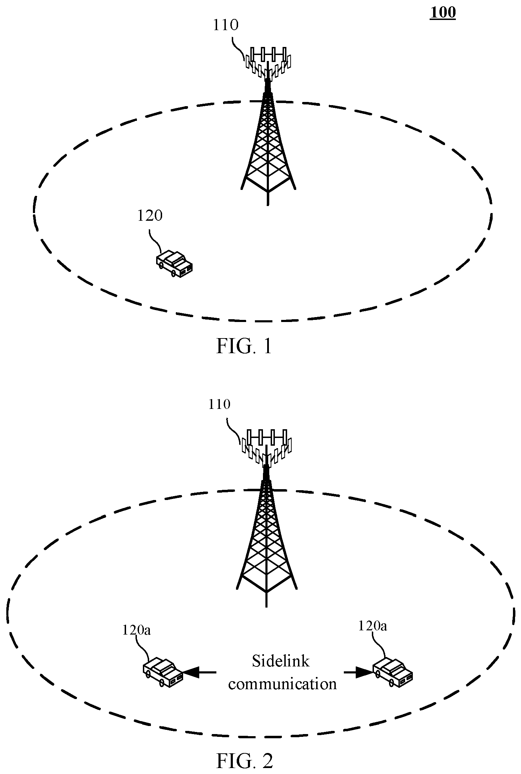

FIG. 1 is an example diagram of a system architecture of a wireless communications system 100 to which an embodiment of this application is applicable. The wireless communications system 100 may include a network device 110 and a terminal device 120. The network device 110 may be a device that communicates with the terminal device 120. The network device 110 may provide communication coverage for a specific geographic area, and may communicate with the terminal device 120 located within the coverage.

FIG. 1 shows one network device and one terminal device as an example. Optionally, the wireless communications system 100 may include one or more network devices 110, and/or one or more terminal devices 120. For a network device 110, the one or more terminal devices 120 may be located within network coverage of the network device 110, or may be located outside network coverage of the network device 110, or may be located partially within the network coverage of the network device 110, and partially outside the network coverage of the network device 110, which is not limited in embodiments of this application.

Optionally, the wireless communications system 100 may further include another network entity such as a network controller or a mobility management entity, which is not limited in embodiments of this application.

It should be understood that technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may be further applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal device, a mobile device, a user terminal, a wireless communication device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a vehicle, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in smart city (smart city), a wireless terminal in smart home (smart home), or the like. For example, the terminal device may act as a scheduling entity that provides a sidelink signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station. Optionally, the terminal device may function as a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that assumes the function of a base station in device-to-device D2D, V2X, and machine-to-machine (machine-to-machine, M2M) communications, a network-side device in a 6G network, a device that assumes the function of a base station in a future communications system, or the like. The base station may support networks of a same access technology or different access technologies. A specific technology and a specific device form used by the network device are not limited in embodiments of this application.

The base station may be stationary or mobile. For example, a helicopter or an unmanned aerial vehicle may be configured to function as a mobile base station, and one or more cells may move according to a location of the mobile base station. In other examples, a helicopter or an unmanned aerial vehicle may be configured to function as a device that communicates with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

### Sidelink communication in different network coverage statuses

Sidelink communication means a sidelink-based communication technology. The sidelink communication may be, for example, device to device (device to device, D2D) or vehicle to everything (vehicle to everything, V2X) communication. Communication data in a conventional cellular system is received or transmitted between a terminal device and a network device, while sidelink communication supports direct communication data transmission between terminal devices. Compared with conventional cellular communication, direct transmission of communication data between terminal devices may have higher spectral efficiency and a lower transmission delay. For example, an Internet of vehicles system uses a sidelink communication technology.

Sidelink communication may be classified, depending on a network coverage status of the terminal device, into sidelink communication within network coverage, sidelink communication with partial network coverage, and sidelink communication out of network coverage.

FIG. 2 is an example diagram of a scenario of sidelink communication within network coverage. In the scenario shown in FIG. 2, two terminal devices 120a are both located within coverage of a network device 110. Therefore, both the two terminal devices 120a may receive configuration signalling (where the configuration signalling in this application may alternatively be replaced with configuration information) from the network device 110, and determine a sidelink configuration based on the configuration signalling from the network device 110. After performing sidelink configuration, both the two terminal devices 120a may perform sidelink communication on a sidelink.

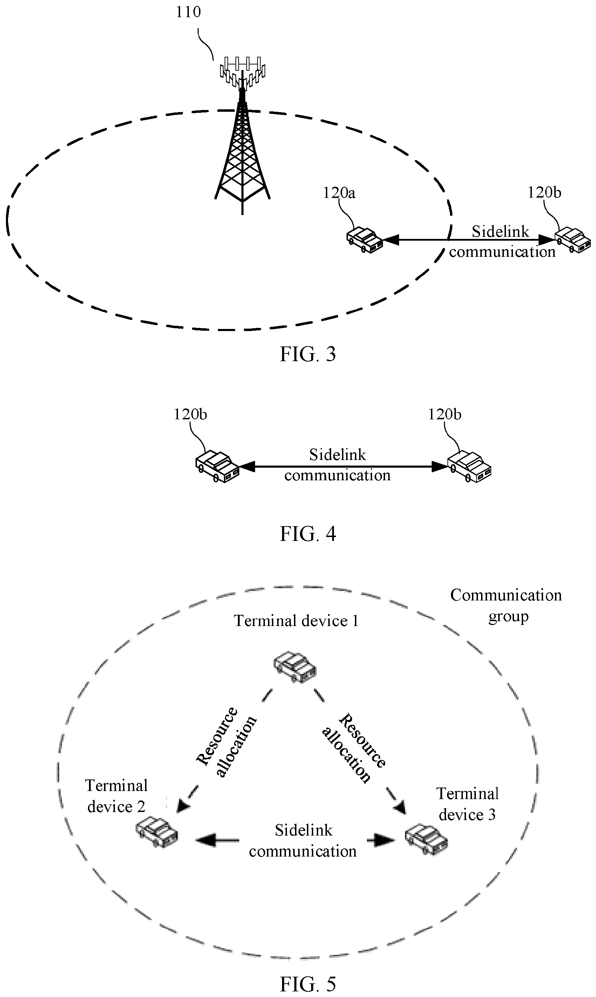

FIG. 3 is an example diagram of a scenario of sidelink communication with partial network coverage. In the scenario shown in FIG. 3, a terminal device 120a performs sidelink communication with a terminal device 120b. The terminal device 120a is located within coverage of a network device 110. Therefore, the terminal device 120a can receive configuration signalling from the network device 110, and determine a sidelink configuration based on the configuration signalling from the network device 110. The terminal device 120b is located out of network coverage, and cannot receive the configuration signalling from the network device 110. In this case, the terminal device 120b may determine a sidelink configuration based on pre-configuration (pre-configuration) information and/or information that is carried on a physical sidelink broadcast channel (physical sidelink broadcast channel, PSBCH) transmitted by the terminal device 120a located within the network coverage. After performing sidelink configuration, both the terminal device 120a and the terminal device 120b may perform sidelink communication on a sidelink.

FIG. 4 is an example diagram of a scenario of sidelink communication out of network coverage. In the scenario shown in FIG. 4, two terminal devices 120b are both located out of network coverage. In this case, both the two terminal devices 120b may determine a sidelink configuration based on pre-configuration information. After performing sidelink configuration, both the two terminal devices 120b may perform sidelink communication on a sidelink.

### Sidelink communication based on a central control node

FIG. 5 is an example diagram of a scenario of sidelink communication based on a central control node. In the scenario of sidelink communication, a plurality of terminal devices may form a communication group, and the communication group has a central control node. The central control node may be a terminal device (for example, a terminal device 1 in FIG. 5) in the communication group, and the terminal device may also be referred to as a cluster header (cluster header, CH) terminal device. The central control node may be responsible for implementing one or more of the following functions: establishing a communication group, adding a group member to or deleting a group member from a communication group, coordinating resources within a communication group, allocating sidelink transmission resources to another terminal device, receiving sidelink feedback information from another terminal device, and coordinating resources with another communication group.

### Mode of sidelink communication

Two modes of sidelink communication are defined in some standards or protocols (for example, the 3rd Generation Partnership Project (3rd Generation Partnership Project, 3GPP)): a first mode and a second mode.

In the first mode, a resource (the resource mentioned in this application may also be referred to as a transmission resource, such as a time-frequency resource) of a terminal device is allocated by a network device. The terminal device may transmit data on a sidelink by using the resource allocated by the network device. The network device may allocate a resource for a single time of transmission to the terminal device, or may allocate a resource for semi-static transmission to the terminal device. The first mode may be applied to a scenario in which there is coverage of the network device, for example, the scenario shown in FIG. 2 above. In the scenario shown in FIG. 2, the terminal device 120a is located within the network coverage of the network device 110. Therefore, the network device 110 may allocate, to the terminal device 120a, a resource to be used in a sidelink transmission process.

In the second mode, the terminal device may independently select one or more resources from a resource pool (resource pool, RP). Then, the terminal device may perform sidelink transmission by using the selected resource. For example, in the scenario shown in FIG. 4, the terminal device 120b is located out of the cell coverage. Therefore, the terminal device 120b may independently select a resource from a pre-configured resource pool to perform sidelink transmission. Alternatively, in the scenario shown in FIG. 2, the terminal device 120a may independently select one or more resources from a resource pool configured by the network device 110, to perform sidelink transmission.

### Data transmission modes of sidelink communication

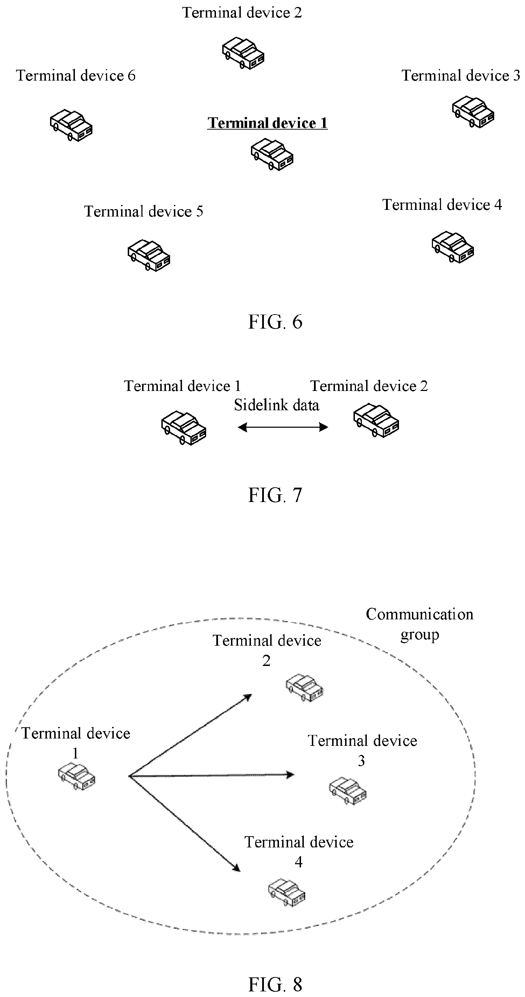

Some sidelink communication systems (such as long term evolution vehicle to everything (long term evolution vehicle to everything, LTE-V2X)) support a broadcast-based data transmission mode (briefly referred to as broadcast transmission below). For the broadcast transmission, a receive-end terminal may be any terminal device around a transmit-end terminal. For example, in FIG. 6, a terminal device 1 is a transmit-end terminal, and a receive-end terminal corresponding to the transmit-end terminal is any terminal device around the terminal device 1, for example, may be any of terminal devices 2 to 6 in FIG. 6.

In addition to the broadcast transmission, some communications systems also support a unicast-based data transmission mode (referred to as unicast transmission for short) and/or a multicast-based data transmission mode (referred to as multicast transmission for short). For example, new radio vehicle to everything (new radio vehicle to everything, NR-V2X) expects to support autonomous driving. Autonomous driving poses higher requirements for data interaction between vehicles. For example, data interaction between vehicles requires a higher throughput, a lower delay, higher reliability, larger coverage, a more flexible resource allocation mode, and the like. Therefore, to improve performance of data interaction between vehicles, NR-V2X introduces unicast transmission and multicast transmission.

For the unicast transmission, there is generally only one terminal device as the receive-end terminal. For example, in FIG. 7, unicast transmission is performed between a terminal device 1 and a terminal device 2. The terminal device 1 may be a transmit-end terminal, and the terminal device 2 may be a receive-end terminal. Alternatively, the terminal device 1 may be a receive-end terminal, and the terminal device 2 may be a transmit-end terminal.

For the multicast transmission, the receive-end terminal may be terminal devices in a communication group, or the receive-end terminal may be terminal devices within a specific transmission distance. For example, in FIG. 8, a terminal device 1, a terminal device 2, a terminal device 3, and a terminal device 4 constitute a communication group. If the terminal device 1 transmits data, all the other terminal devices (the terminal device 2 to the terminal device 4) in the group may be receive-end terminals.

### Carrier aggregation technology

To meet the requirements of increasing a peak rate for a single user and improving system capacity, one of the most straightforward methods is to increase a system transmission bandwidth. Therefore, a technology for increasing a transmission bandwidth, that is, a carrier aggregation (carrier aggregation, CA) technology, is introduced in a communications system. Using the CA technology may aggregate a plurality of (for example, 2 to 5) component carriers (component carrier, CC), so as to increase a transmission bandwidth, thereby effectively increasing an uplink and downlink transmission rate.

In some implementations, the CCs participated in aggregation may be carries adjacent to each other in a frequency band, or may be carries non-adjacent to each other in a frequency band.

In some other implementations, the CA technology may be classified based on a range of aggregated carriers. CA types may be classified into intra-band CA (intra-band CA) and inter-band CA (inter-band CA, or inter-frequency CA). As the name suggests, for the intra-band CA, CCs participating in carrier aggregation belong to a same frequency band. For the inter-band CA, CCs participating in carrier aggregation belong to a plurality of different frequency bands.

For ease of understanding, the CA technology is described below by using a scenario of communication between a network device and a terminal device and a scenario of sidelink communication between terminal devices as an example.

In the scenario of communication between a network device and a terminal device, CA is a bandwidth extension technology that has been supported since the LTE-Advanced standard, and a plurality of CCs may be aggregated and received or transmitted by a terminal device at a time. In this scenario, the intra-band CA may be used in a case in which a cell carrier bandwidth is greater than a single-carrier bandwidth capability of a terminal device. In this case, the terminal device may implement a "wide carrier" (wide carrier) operation by using the CA method.

For example, if the network device supports a 300 MHz carrier, while the terminal device supports only a maximum of a 100 MHz carrier, in this case, to increase a transmission rate between the terminal device and the network device, the terminal device may communicate with the network device in a bandwidth greater than 100 MHz by using the CA method.

In some scenarios, when the terminal device communicates with the network device based on CA, both a primary cell (primary cell, PCell) and a secondary cell (secondary cell, SCell) may be configured, where the secondary cell may further include a primary secondary cell (primary secondary cell, PSCell). Currently, in a known communication protocol (for example, NR R15), a beam failure recovery mechanism is designed for the PCell and the PSCell. A main function module (or referred to as a main step) of the beam failure recovery mechanism may be divided into the following four steps: beam failure detection (beam failure detection, BFD), new beam identification (new beam identification, NBI), beam failure recovery ReQest (beam failure recovery ReQest, BFRQ), and network side response.

In other words, in the beam failure detection step, the terminal device may measure a PDCCH to determine link quality corresponding to a downlink transmit beam. If the corresponding link quality is poor, it is considered that a beam failure occurs on the downlink beam. Then, in the new beam identification step, the terminal device may measure a set of candidate beams, and select, from the candidate beams, a beam that meets a specific threshold as a new beam. Next, the terminal device notifies, through the BFRQ procedure, the network device that a beam failure occurs, and reports the selected new beam. Accordingly, in the network side response step, after receiving BFRQ information transmitted by the terminal device, the network device may learn that a beam failure occurs on the terminal device, and choose to transmit a PDCCH on the new beam. Then, the network device transmits the PDCCH to the terminal device on the new beam. Accordingly, after the terminal device receives the PDCCH on the new beam, it may be considered that response information is correctly received from the network side. In this case, the beam failure recovery procedure is successfully completed.

In the scenario of sidelink communication, when the terminal device communicates with another terminal device in a broadcast or multicast manner, the terminal device may select, based on a pre-stored mapping relationship between a service type (service type) and a carrier set, a carrier set corresponding to a service to which to-be-transmitted data belongs, and perform carrier aggregation based on the selected carrier set, so as to communicate with the another terminal device.

In some implementations, the terminal device may determine a CC for carrier aggregation from the selected carrier set based on CRB. For example, the terminal device may measure a CBR value in a resource pool, and compare it with a CBR threshold corresponding to a priority of the to-be-transmitted data. In a case that the measured CBR value is less than the CBR threshold, the terminal device may determine that the carrier may be used for carrier aggregation. Otherwise, in a case that the measured CBR value is greater than or equal to the CBR threshold, the terminal device may determine that the carrier may not be used for carrier aggregation.

It may be learned from the foregoing description that a plurality of carriers (or at least two carriers) to be used in sidelink communication need to be determined based on a mapping relationship between a carrier and a service type. However, the mapping relationship is fixed and is not easy to change. The manner of determining a carrier based on the fixed mapping relationship is not flexible.

Therefore, to avoid the foregoing problem, an embodiment of this application provides a wireless communication method. In this method, a first terminal device may configure, for a second terminal device, a plurality of carriers to be used on a sidelink, such that the plurality of carriers to be used on the sidelink may change depending on configuration, thereby facilitating improvement of flexibility of configuring a plurality of carriers on the sidelink.

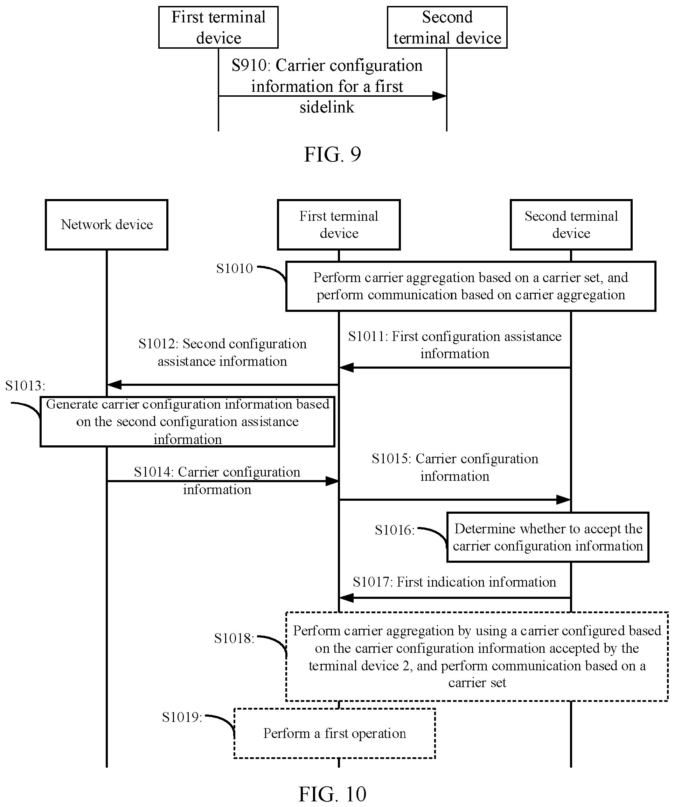

For ease of understanding, a wireless communication method according to an embodiment of this application is described below with reference to FIG. 9 by using a first terminal device and a second terminal device as an example. Unicast communication may be performed between the first terminal device and the second terminal device by using a first sidelink. FIG. 9 is a schematic flowchart of a wireless communication method according to an embodiment of this application. The method shown in FIG. 9 includes step S910.

In step S910, a first terminal device transmits carrier configuration information for a first sidelink to a second terminal device.

The carrier configuration information is used to configure at least two carriers for the first sidelink. The at least two carriers may include carriers that are to participate in carrier aggregation, in other words, the at least two carriers may include component carriers that are to participate in carrier aggregation. Therefore, alternatively, the carrier configuration information may be used to perform related configuration for carrier aggregation on the first sidelink.

In addition, in embodiments of this application, the carrier configuration information may configure the carriers on the first sidelink in a carrier set manner, where a carrier set may include the at least two carriers.

In some scenarios, the first terminal device transmitting the carrier configuration information to the second terminal device may be understood as follows: The first terminal device configures, for the second terminal device, at least two carriers on the first sidelink, that is, the first terminal device may control a carrier to be used by the second terminal device. Therefore, the first terminal device may also be referred to as a "control-side terminal device", and the second terminal device may also be referred to as a "controlled-side terminal device".

Generally, different terminal devices support different carriers. The first terminal device may not be able to determine a carrier supported by the second terminal device. In this case, the first terminal device may configure, for the second terminal device, a carrier not supported by the second terminal device, which causes a carrier configuration failure.

Therefore, to increase a carrier configuration success rate, the second terminal device may transmit configuration assistance information (for example, "first configuration assistance information") to the first terminal device, so as to assist the first terminal device in configuring, for the second terminal device, at least two carriers on the first sidelink, in other words, the first configuration assistance information is used to determine the carrier configuration information. Therefore, the configuration assistance information may also be referred to as "carrier configuration assistance information".

In some implementations, the first configuration assistance information may include a carrier expected by the second terminal device to be configured. A carrier status of the second terminal device may be considered for determining the carrier expected by the second terminal device to be configured. Generally, once a carrier is being used on a communication link, the carrier may not be used on another link at the same time. Therefore, the carrier expected by the second terminal device may be determined based on a carrier used on another communication link used by the second terminal device. The another communication link used by the second terminal device may be a communication link other than the first sidelink, and the another communication link may include one or more of an uplink, a downlink, or a sidelink.

In addition, the first sidelink is a link used for communication between the first terminal device and the second terminal device. Therefore, a carrier status of the first terminal device may be considered for determining the carrier expected by the second terminal device to be configured. For example, the carrier expected by the second terminal device may be determined based on a carrier supported by a terminal capability of the first terminal device. For another example, the carrier expected by the second terminal device may also be determined based on an idle carrier for the first terminal device. This is not limited in embodiments of this application.

The carrier status of the first terminal device may be transmitted from the first terminal device to the second terminal device. In some implementations, when the first terminal device requests the second terminal device for the first configuration assistance information (for details, reference is made to a trigger manner 3 described below), the first terminal device may add the carrier status of the first terminal device to the request. Certainly, the first terminal device may alternatively transmit the carrier status of the first terminal device to the second terminal device via other information. This is not limited in embodiments of this application.

It should be noted that, as described above, the second terminal device may determine, based on the carrier status of the second terminal device or the carrier status of the first terminal device, the carrier expected by the second terminal device to be configured. Certainly, the second terminal device may alternatively consider both the carrier status of the first terminal device and the carrier status of the second terminal device to determine the carrier expected by the second terminal device. This is not limited in embodiments of this application.

In addition, in embodiments of this application, the first configuration assistance information may indicate the carrier expected by the second terminal device to be configured, by carrying indication information (for example, may be an identifier, a sequence number, or the like of the carrier) of the carrier expected by the second terminal device to be configured. A specific manner of indicating the carrier expected by the second terminal device to be configured is not limited in embodiments of this application.

In some other implementations, the first configuration assistance information may include a carrier supported by a terminal capability of the second terminal device. Generally, the carrier supported by the terminal capability of the second terminal device may be understood as a carrier available for the second terminal device.

In embodiments of this application, the first configuration assistance information may indicate the carrier supported by the terminal capability described above, by carrying indication information of the carrier supported by the terminal capability. A specific manner of indicating the carrier supported by the terminal capability is not limited in embodiments of this application.

Content of the first configuration assistance information is described above, and a trigger manner for transmitting the first configuration assistance information is described below. The trigger manner of the first configuration assistance information is not limited in embodiments of this application. Several trigger manners are described below.

Trigger manner 1: The first configuration assistance information may be periodically triggered to be transmitted.

In other words, the second terminal device may transmit the first configuration assistance information periodically in terms of time. A period used for periodic triggering may be configured in a manner of pre-definition, pre-configuration, network configuration, or the like, which is not limited in embodiments of this application.

It should be noted that if the first terminal device does not have a carrier aggregation capability, but the second terminal device still periodically transmits the first configuration assistance information to the first terminal device, in this case, the first configuration assistance information is useless to the first terminal device, and periodically transmitting the first configuration assistance information may cause a waste of transmission resources. Therefore, the periodic trigger manner is generally a trigger manner used when it is determined that the first terminal device has a carrier aggregation capability. Certainly, if the waste of transmission resources is not an issue to be considered, the periodic trigger manner may be used regardless of whether the first terminal device has a carrier aggregation capability or not.

In addition, whether the first terminal device has a carrier aggregation capability may be requested by the second terminal device from the first terminal device, or may be actively notified by the first terminal device to the second terminal device. This is not limited in embodiments of this application.

Trigger manner 2: The first configuration assistance information may be triggered to be transmitted based on an event.

In other words, if an event occurs, the second terminal device transmits the first configuration assistance information to the first terminal device. Otherwise, if the foregoing event does not occur, the second terminal device does not transmit the first configuration assistance information to the first terminal device. The event may be configured in a manner of pre-definition, pre-configuration, configuration by a network device, or the like, which is not limited in embodiments of this application.

It should be noted that if the first terminal device does not have a carrier aggregation capability, but the second terminal device still periodically transmits the first configuration assistance information to the first terminal device when the foregoing event occurs, in this case, the first configuration assistance information is useless to the first terminal device, and triggering the first configuration assistance information to be transmitted based on the event may cause a waste of transmission resources. Therefore, the trigger manner based on an event is generally a trigger manner used when it is determined that the first terminal device has a carrier aggregation capability. Certainly, if the waste of transmission resources is not an issue to be considered, the trigger manner based on an event may be used regardless of whether the first terminal device has a carrier aggregation capability or not.

In embodiments of this application, the event may be related to a scenario in which a carrier usage status of the second terminal device changes. Several possible events below are used as examples for description.

In some scenarios, after link quality of the first sidelink changes, a carrier used on the first sidelink may be also changed. For example, when the link quality of the first sidelink deteriorates, the second terminal device may no longer use a carrier on the first sidelink, causing a change in carriers available for the first sidelink of the second terminal device. Therefore, the foregoing event may be associated with the link quality of the first sidelink. In some implementations, the foregoing event may include a change in the link quality of the first sidelink. The change in the link quality may include, for example, deterioration of the link quality.

**In** some scenarios, after a conflict occurs between communication links, the second terminal device may no longer use a communication link on which the conflict occurs. In this case, the second terminal device may no longer use a carrier on the communication link on which the conflict occurs, or the second terminal device may use the carrier on the first sidelink. Regardless of whether the second terminal device finally uses the carrier, it may cause a change in carriers available for the first sidelink of the second terminal device. Therefore, the foregoing event may be associated with a conflict between the first sidelink and another communication link. In some implementations, the foregoing event may include a conflict between the first sidelink and another communication link.

In some scenarios, the carrier expected by the second terminal device to be configured may change for various reasons. When a change occurs in the carrier expected by the second terminal device to be configured, the change in the carrier expected by the second terminal device to be configured needs to be considered when configuring a carrier to be used on the first sidelink. Therefore, the foregoing event may be associated with a change in the carrier expected by the second terminal device to be configured. In some implementations, the foregoing event may include a change in the carrier expected by the second terminal device to be configured.

In some scenarios, the configuration assistance information changes for various reasons. For example, as described above, after the carrier expected by the second terminal device to be configured changes, the configuration assistance information also changes. Correspondingly, the change in the configuration assistance information needs to be considered when configuring the carrier to be used on the first sidelink. Therefore, the foregoing event may be associated with a change in the configuration assistance information. In some implementations, the foregoing event may include the first configuration assistance information is different from configuration assistance information previously transmitted, where the configuration assistance information is used to determine the carrier configuration information, in other words, the configuration assistance information has a same function as the first configuration assistance information.

In some scenarios, there may be a change in carrier configuration of a communication link, other than the first sidelink, used by the second terminal device. When the carrier configuration of the another communication link changes, it may result in a change in carriers available for the first sidelink of the second terminal device. Therefore, the foregoing event may be associated with a change in the carrier configuration of another communication link for the second terminal device. In some implementations, the foregoing event may include a change in the carrier configuration of another communication link for the second terminal device.

Certainly, in embodiments of this application, in addition to being related to various scenarios in which a carrier usage status of the second terminal device changes, the foregoing event may be related to transmission of the configuration assistance information. In some implementations, the foregoing event may include the second terminal device having not transmitted configuration assistance information by using the first sidelink, or the second terminal device having not transmitted configuration assistance information by using the first sidelink before transmitting the first configuration assistance information.

Trigger manner 3: The first configuration assistance information may be triggered to be transmitted based on a request from the first terminal device.

In other words, the first terminal device may actively transmit a request to the second terminal device to request the first configuration assistance information. Correspondingly, in response to the request, the second terminal device may transmit the first configuration assistance information to the first terminal device.

It should be noted that, an occasion for transmitting the request by the first terminal device is not limited in embodiments of this application. In some implementations, the first terminal device may transmit the request to the second terminal device before transmitting the carrier configuration information. In some other implementations, the first terminal device may alternatively transmit the request to the second terminal device after failing to configure a carrier for the first sidelink to the second terminal device.

It should be noted that the foregoing trigger manners 1 to 3 may be used separately, or may be used in combination, which is not limited in embodiments of this application.

In some scenarios, the first terminal device and/or the second terminal device may be located within coverage of the network device. In this case, if the first terminal device directly configures a carrier to be used by the second terminal device on the first sidelink, it may result in the carrier configured to the first sidelink being allocated by the network device to another terminal device, resulting in an improper configuration of the carrier on the first sidelink.

For example, for a network device located in an urban area, a large amount of service data may need to be transmitted. In this case, the network device generally does not expect thata carrier being used for cellular communication is allocated for sidelink communication. In this case, if the carrier configured by the first terminal device for the second terminal device is a carrier being used for cellular communication, it may result in a conflict between the cellular communication and sidelink communication.

Therefore, to avoid the foregoing case, in embodiments of this application, when the first terminal device or the second terminal device is located within the network coverage, the network device may participate in a carrier configuration process for the first sidelink. Certainly, if the foregoing problem is not considered, in a case in which the first terminal device or the second terminal device is located within coverage of the network device, the first terminal device may directly configure a carrier on the first sidelink without using the network device.

A solution in which the network device participates in carrier configuration is described below using each of a case in which the first terminal device is located within the network coverage and a case in which the second terminal device is located within the network coverage.

In Case 1, the first terminal device is located within the network coverage.

In this case, the carrier configuration information may be determined by the network device. For example, the network device may configure, to the second terminal device by using the first terminal device, at least two carriers to be used on the first sidelink. In other words, the network device may transmit the carrier configuration information to the first terminal device. Correspondingly, the first terminal device transmits the received carrier configuration information to the second terminal device.

In some scenarios, the network device may not be able to learn a carrier status of the second terminal device. In this case, the carrier configured for the first sidelink by the network device may not be usable by the second terminal device. Therefore, to improve properness of the carrier configured for the first sidelink by the network device, the first terminal device may transmit the configuration assistance information described above to the network device, so as to assist the network device in determining the carrier configuration information.

It should be noted that, in some embodiments of this application, the first terminal device may directly transmit, to the network device, the configuration assistance information transmitted by the second terminal device, that is, the first terminal device transmits second configuration assistance information to the network device, where the second configuration assistance information is the same as first configuration assistance information (that is, the configuration assistance information transmitted by the second terminal device to the first terminal device).

Certainly, alternatively, after receiving the first configuration assistance information transmitted by the second terminal device, the first terminal device may process the first configuration assistance information to obtain the second configuration assistance information, and transmit the second configuration assistance information to the network device. In this case, the second configuration assistance information is different from the first configuration assistance information. The second configuration assistance information may be determined based on the first configuration assistance information, or the second configuration assistance information may be used to indicate the first configuration assistance information.

For example, assuming that the first configuration assistance information includes a carrier supported by the terminal capability of the second terminal device, after receiving the first configuration assistance information, the first terminal device may add the carrier supported by the terminal capability of the first terminal device to the first configuration assistance information, so as to obtain the second configuration assistance information. Then, the first terminal device may transmit the second configuration assistance information to the network device.

Correspondingly, after the second terminal device receives the carrier configuration information, the second terminal device may choose to accept part or all of configuration information in the carrier configuration information, or the second terminal device may choose to reject part or all of configuration information in the carrier configuration information. In this case, the second terminal device may notify the first terminal device of the foregoing selection result via first indication information, so that the first terminal device subsequently determines whether to communicate with the second terminal device on a carrier configured based on the carrier configuration information.

In some implementations, the first indication information may be carried in a configuration complete message or configuration failure message. The configuration complete message is used to indicate that a carrier configuration process for the first sidelink is completed. The configuration failure message is used to indicate that a carrier configuration process for the first sidelink fails.

It should be noted that when the first indication information indicates that the carrier configuration information is rejected, and the first indication information is carried in the configuration complete message, it may be understood that a configuration process for the first sidelink is completed, and configuration of configuration parameters other than the carrier configuration may be successful or partially successful, but the carrier on the first sidelink has not been configured successfully.

In addition, when the first indication information indicates that the carrier configuration information is accepted, and the first indication information is carried in the configuration failure message, it may be understood that a carrier configuration process for the first sidelink fails.

In some other implementations, the first terminal device may further notify the network device of the foregoing selection result, so that the network device determines whether to reconfigure a carrier for the first sidelink. Therefore, the first terminal device may transmit second indication information to the network device, so as to indicate that the second terminal device accepts part or all of configuration information in the carrier configuration information, or indicate that the second terminal device rejects part or all of configuration information in the carrier configuration information.

It should be noted that the second indication information may be the same as the first indication information, that is, the first terminal device directly forwards the first indication information to the network device. Certainly, the second indication information may alternatively be different from the first indication information, that is, the second indication information may be used to indicate the first indication information, or the second indication information may be determined based on the first indication information. In other words, after receiving the first indication information, the first terminal device processes the first indication information to obtain the second indication information, and transmits the second indication information to the network device.

In Case 1, for the first terminal device located within coverage of the network device, the first terminal device may be in a connected state. In this case, a resource allocation mode of the first terminal device may include Mode 1 or Mode 2 described above. Certainly, the carrier configuration process assisted by the network device may be applicable to the first terminal device only when the resource allocation mode is Mode 1.

In Case 1, the second terminal device may not be located within coverage of the network device, in other words, the second terminal device may be located outside coverage of the network device, that is, the scenario shown with reference to FIG. 3. Certainly, in Case 1, the second terminal device may alternatively be located within coverage of the network device, which is not limited in embodiments of this application.

In Case 2, the second terminal device is located within coverage of the network device.

In this case, the second terminal device may transmit carrier configuration information to the network device. Correspondingly, the network device may instruct, by using first indication information, the second terminal device to accept part or all of configuration information in the carrier configuration information, or the network device may instruct the second terminal device to reject part or all of configuration information in the carrier configuration information.

For example, when it is determined that a carrier in the carrier configuration information is idle, the network device may instruct, by using the first indication information, the second terminal device to accept the carrier configuration information. Otherwise, when it is determined that a carrier in the carrier configuration information is occupied for cellular communication, the network device may instruct, by using the first indication information, the second terminal device to reject the carrier configuration information.

Generally, after the network device indicates the configuration result of the carrier configuration information to the second terminal device by using the first indication information, the first terminal device also needs to learn the configuration result of the carrier configuration information, so that the first terminal device subsequently determines whether to communicate with the second terminal device by using the carrier configured based on the carrier configuration information. Therefore, the second terminal device may transmit the first indication information to the first terminal device.

In some implementations, the first indication information may be carried in a configuration complete message or configuration failure message. The configuration complete message is used to indicate that a carrier configuration process for the first sidelink is completed. The configuration failure message is used to indicate that a carrier configuration process for the first sidelink fails.

It should be noted that when the first indication information indicates that the carrier configuration information is rejected, and the first indication information is carried in the configuration complete message, it may be understood that a carrier configuration process for the first sidelink is completed, but the carrier on the first sidelink is not configured successfully.

In addition, when the first indication information indicates that the carrier configuration information is accepted, and the first indication information is carried in the configuration failure message, it may be understood that a carrier configuration process for the first sidelink fails, but the failure of the configuration process is not due to the second terminal device rejecting the carrier configuration information.

In Case 2, for the second terminal device located within coverage of the network device, the second terminal device may be in a connected state. In this case, a resource allocation mode of the second terminal device may include Mode 1 or Mode 2 described above.

In Case 2, whether the first terminal device is located within coverage of the network device is not limited. For example, the first terminal device may not be located within coverage of the network device, in other words, the first terminal device may be located outside coverage of the network device, that is, the scenario shown with reference to FIG. 3. Certainly, in Case 2, the first terminal device may alternatively be located within coverage of the network device, which is not limited in embodiments of this application.

In some implementations, in a case that the second terminal device rejects part or all of configuration information in the carrier configuration information, and/or the second terminal device transmits the configuration failure message to the first terminal device, the first terminal device and/or the second terminal device perform one or more of following operations: determining that a radio link failure (radio link failure, RLF) occurs on the first sidelink; disconnecting the first sidelink; or reconfiguring the carrier configuration information for the first sidelink.

Otherwise, in a case that the second terminal device accepts part or all of configuration information in the carrier configuration information, the first terminal device may communicate with the second terminal device by using the carrier configured based on the configuration information accepted by the second terminal device.

In embodiments of this application, before completion of configuration signalling interaction for the first sidelink mentioned above, communication may be performed on the first sidelink without using the carrier aggregation technology, that is, communication may be performed on the first sidelink using a single carrier. Certainly, to increase a bandwidth, before completion of configuration signalling interaction for the first sidelink mentioned above, communication may alternatively be performed on the first sidelink by using the carrier aggregation technology. In this case, a carrier that participates in carrier aggregation may be configured based on pre-configuration information, or a carrier used on the first sidelink may be a carrier determined based on a configured rule of mapping between a service and a carrier. The mapping relationship in LTE V2X may be reused in the rule of mapping between a service and a carrier.

For example, before the first terminal device transmits the carrier configuration information to the second terminal device, a carrier to be used on the first sidelink is not configured. However, the first terminal device needs to communicate with the second terminal device based on carrier aggregation (for example, to transmit PC5-radio resource control (PC5-radio resource control, PC5-RRC) signalling (for example, PC5-S signalling), to transmit a discovery (discovery) message, to transmit a direct communication request (direct communication request, DCR), or the like). In this case, the used carrier may be a carrier configured based on pre-configuration information, and/or may be a carrier determined based on a configured rule of mapping between a service and a carrier.

It should be noted that a manner in which the terminal device selects the carrier set may be a conventional manner of selecting a carrier for a sidelink. For example, a carrier that is to participate in the carrier aggregation may be selected based on the CBR threshold described above. This is not limited in embodiments of this application.

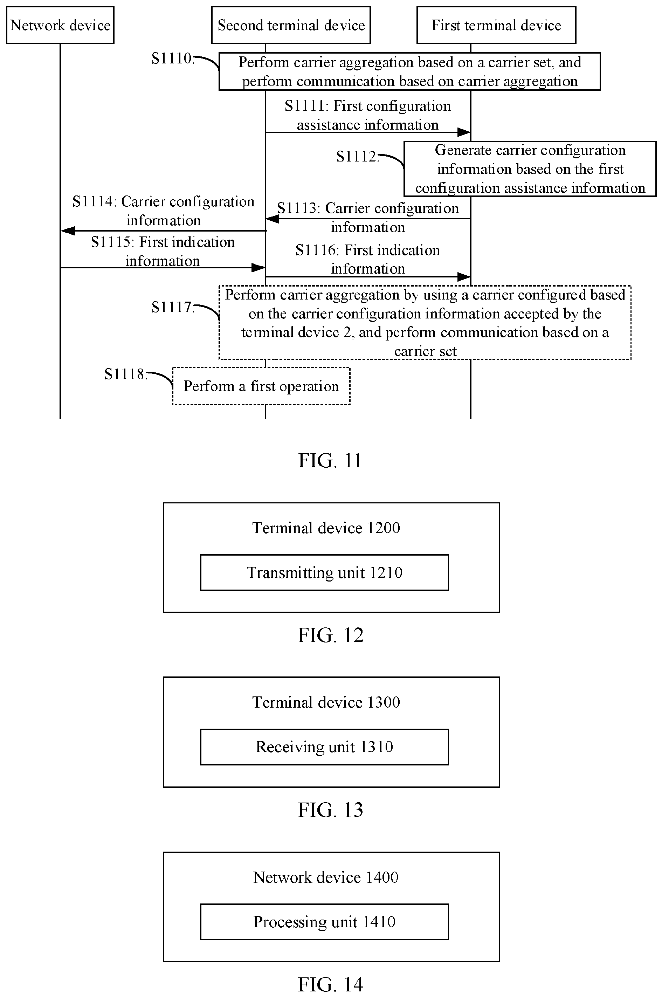

For ease of understanding, the wireless communication method in embodiments of this application is described below with reference to FIG. 10 and FIG. 11. The following description is provided using an example in which the first terminal device is a terminal device 1, the second terminal device is a terminal device 2, and the first sidelink is a sidelink 1.

It should be noted that the methods illustrated in FIG. 10 and FIG. 11 are respectively described using an example in which the first terminal device is within coverage of the network device and an example in which the second terminal device is within coverage of the network device, to mainly introduce execution processes of the methods. In FIG. 10 and FIG. 11, information that has a same function as the foregoing information uses a same name. For content included in the information and a transmission manner of the information, reference may be made to the foregoing description. For brevity, details are not described below again.

FIG. 10 is a schematic flowchart of a wireless communication method according to an embodiment of this application. Referring to FIG. 10, it is assumed that the terminal device 1 is located within coverage of the network device, and the terminal device 2 is not located within coverage of the network device. The method in FIG. 10 includes step S1010 to step S1019.

In step S1010, in a case that the terminal device 1 does not configure a carrier to be used for carrier aggregation on the sidelink 1, carrier aggregation may be performed between the terminal device 1 and the terminal device 2 on the first sidelink based on a carrier set, and communication may be performed between the terminal device 1 and the terminal device 2 based on carrier aggregation.

The carrier set may be configured based on pre-configuration information, and/or may be determined based on a configured rule of mapping between a service and a carrier. The mapping relationship in LTE V2X may be reused in the rule of mapping between a service and a carrier.

It should be noted that, in step S1010, communication may alternatively be performed on the first sidelink by using a single carrier, which is not limited in embodiments of this application.

In step S1011, the terminal device 2 transmits first configuration assistance information to the terminal device 1.

In step S1012, the terminal device 1 transmits second configuration assistance information to the network device.

In step S1013, the network device generates carrier configuration information based on the second configuration assistance information.

In step S1014, the network device transmits the carrier configuration information to the terminal device 1.

In step S1015, the terminal device 1 transmits the carrier configuration information to the terminal device 2.

In step S1016, the terminal device 2 determines whether to accept the carrier configuration information.

In step S1017, the terminal device 2 transmits first indication information to the terminal device 1, where the first indication information is used to indicate a determining result in step S1016.

In other words, the first indication information indicates that the terminal device 2 accepts part or all of configuration information in the carrier configuration information, or the first indication information indicates that the terminal device 2 rejects part or all of configuration information in the carrier configuration information. In a case that the first indication information indicates that part or all of configuration information in the carrier configuration information is accepted, step S1018 is performed. In a case that the first indication information indicates that part or all of configuration information in the carrier configuration information is accepted, step S1019 is performed.

In step S1018, carrier aggregation is performed between the terminal device 1 and the terminal device 2 using a carrier configured based on the carrier configuration information accepted by the terminal device 2, and the terminal device 1 and the terminal device 2 communicate with each other based on a carrier set.

In step S1019, the terminal device 1 performs a first operation.

The first operation includes one or more of the following: transmitting second indication information to the network device, where the second indication information is used to indicate the first indication information; determining that a radio link failure occurs on the first sidelink; disconnecting the first sidelink; or reconfiguring carrier configuration information for the first sidelink.

FIG. 11 is a schematic flowchart of a wireless communication method according to another embodiment of this application. Referring to FIG. 11, it is assumed that the terminal device 2 is located within coverage of the network device, and the terminal device 1 is not located within coverage of the network device. The method in FIG. 11 includes step S1110 to step S1118.

In step S1110, in a case that the terminal device 1 does not configure a carrier to be used for carrier aggregation on the sidelink 1, carrier aggregation may be performed between the terminal device 1 and the terminal device 2 on the first sidelink based on a carrier set, and communication may be performed between the terminal device 1 and the terminal device 2 based on the carrier aggregation.

The carrier set may be configured based on pre-configuration information, and/or may be determined based on a configured rule of mapping between a service and a carrier. The mapping relationship in LTE V2X may be reused in the rule of mapping between a service and a carrier.

It should be noted that, in step S1110, communication may alternatively be performed on the first sidelink by using a single carrier, which is not limited in embodiments of this application.

In step S1111, the terminal device 2 transmits first configuration assistance information to the terminal device 1.

In step S1112, the terminal device 1 generates carrier configuration information based on the first configuration assistance information.

In step S1113, the terminal device 1 transmits the carrier configuration information to the terminal device 2.

In step S1114, the terminal device 2 transmits the carrier configuration information to the network device.

In step S1115, the network device transmits first indication information to a terminal device 2.

The first indication information is used to instruct the terminal device 2 to accept part or all of configuration information in the carrier configuration information, or the first indication information is used to instruct the terminal device 2 to reject part or all of configuration information in the carrier configuration information.

In step S1116, the terminal device 2 transmits the first indication information to the terminal device 1.

In a case that the first indication information indicates that the terminal device 2 determines to accept the carrier configuration information, step S1117 is performed. In a case that the first indication information indicates that the terminal device 2 determines to reject the carrier configuration information, step S1118 and step S1119 are performed.

In step S1117, carrier aggregation is performed between the terminal device 1 and the terminal device 2 using a carrier configured based on the carrier configuration information accepted by the terminal device 2, and communication may be performed between the terminal device 1 and the terminal devic e 2 based on carrier aggregation.

In step S1118, the terminal device 1 performs a first operation.

The first operation includes one or more of the following: determining that a radio link failure occurs on the first sidelink; disconnecting the first sidelink; or reconfiguring carrier configuration information for the first sidelink.

The foregoing describes in detail the method embodiments of this application with reference to FIG. 1 to FIG. 11. The following describes in detail apparatus embodiments of this application with reference to FIG. 12 to FIG. 15. It should be understood that the description of the method embodiments corresponds to the description of the apparatus embodiments, and therefore, for parts that are not described in detail, reference may be made to the foregoing method embodiments.

FIG. 12 is a schematic diagram of a terminal device according to an embodiment of this application. The terminal device 1200 shown in FIG. 12 may be, for example, the foregoing described first terminal device. The terminal device 1200 shown in FIG. 12 includes a transmitting unit 1210.

The transmitting unit 1210 is configured to transmit carrier configuration information for a first sidelink to a second terminal device, where the first sidelink is a sidelink on which unicast communication is performed between the first terminal device and the second terminal device, and the carrier configuration information is used to configure at least two carriers for the first sidelink.

In a possible implementation, the foregoing terminal device further includes: a first receiving unit, configured to receive first configuration assistance information transmitted by the second terminal device, where the first configuration assistance information is used to determine the carrier configuration information.

In a possible implementation, the first configuration assistance information includes at least one of the following: a carrier expected by the second terminal device to be configured; or a carrier supported by a terminal capability of the second terminal device.

In a possible implementation, the carrier expected by the second terminal device to be configured is determined based on at least one of the following: a carrier used on a sidelink other than the first sidelink by the second terminal device; a carrier used on an uplink by the second terminal device; a carrier used on a downlink by the second terminal device; or a carrier supported by a terminal capability of the first terminal device.

In a possible implementation, transmitting of the first configuration assistance information is triggered in one or more of following manners: periodic triggering; triggering based on an event; or triggering based on a request from the first terminal device.

In a possible implementation, the event includes one or more of the following: a change occurs in link quality of the first sidelink; a conflict occurs between the first sidelink and another communication link; a change occurs in a carrier expected by the second terminal device to be configured; no configuration assistance information used to determine the carrier configuration information has been transmitted by the second terminal device via the first sidelink; the first configuration assistance information is different from configuration assistance information previously transmitted for determining the carrier configuration information; or a change occurs in carrier configuration of a communication link, other than the first sidelink, used by the second terminal device.

In a possible implementation, the carrier configuration information is determined by the network device.

In a possible implementation, the first terminal device is in a connected state, and/or a resource allocation mode of the first terminal device includes a mode 1.

In a possible implementation, the transmitting unit is further configured to: transmit second configuration assistance information to the network device, where the second configuration assistance information is used to indicate the first configuration assistance information, and the first configuration assistance information is used to determine the carrier configuration information.

In a possible implementation, the foregoing terminal device further includes: a second receiving unit, configured to receive the carrier configuration information transmitted by the network device.

In a possible implementation, the foregoing terminal device further includes: a third receiving unit, configured to receive first indication information transmitted by the second terminal device, where the first indication information is used to indicate that the second terminal device accepts part or all of configuration information in the carrier configuration information.

In a possible implementation, the foregoing terminal device further includes: a fourth receiving unit, configured to receive first indication information transmitted by the second terminal device, where the first indication information is used to indicate that the second terminal device rejects part or all of configuration information in the carrier configuration information.

In a possible implementation, the foregoing terminal device further includes: a processing unit, configured to perform, in response to the first indication information, one or more of following operations: determining that a radio link failure occurs on the first sidelink; disconnecting the first sidelink; reconfiguring carrier configuration information for the first sidelink; or transmitting second indication information to a network device, where the second indication information is used to indicate whether the second terminal device accepts part or all of configuration information in the carrier configuration information.

In a possible implementation, the first indication information is carried in a configuration complete message or configuration failure message.

In a possible implementation, the foregoing terminal device further includes: a communications unit, configured to perform communication with the second terminal device based on a carrier set, where the carrier set includes one or more of the following: a carrier determined based on pre-configuration information; or a carrier determined based on a configured rule of mapping between a service and a carrier.

FIG. 13 is a schematic diagram of a terminal device according to another embodiment of this application. The terminal device 1300 shown in FIG. 13 may be the foregoing described second terminal device. The terminal device 1300 includes a receiving unit 1310.

a receiving unit 1310, configured to receive carrier configuration information transmitted by a first terminal device for a first sidelink, where the first sidelink is a sidelink on which unicast communication is performed between the first terminal device and the second terminal device, and the carrier configuration information is used to configure at least two carriers for the first sidelink.

In a possible implementation, the foregoing terminal device further includes: a first transmitting unit, configured to transmit first configuration assistance information to the first terminal device, where the first configuration assistance information is used to determine the carrier configuration information.

In a possible implementation, the first configuration assistance information includes at least one of the following: a carrier expected by the second terminal device to be configured; or a carrier supported by a terminal capability of the second terminal device.

In a possible implementation, the carrier expected by the second terminal device to be configured is determined based on at least one of the following: a carrier used on a sidelink other than the first sidelink by the second terminal device; a carrier used on an uplink by the second terminal device; a carrier used on a downlink by the second terminal device; or a carrier supported by a terminal capability of the first terminal device.

In a possible implementation, transmitting of the first configuration assistance information is triggered in one or more of following manners: periodic triggering; triggering based on an event; or triggering based on a request from the first terminal device.

In a possible implementation, the event includes one or more of the following: a change occurs in link quality of the first sidelink; a conflict occurs between the first sidelink and another communication link; a change occurs in a carrier expected by the second terminal device to be configured; no configuration assistance information used to determine the carrier configuration information has been transmitted by the second terminal device via the first sidelink; the first configuration assistance information is different from configuration assistance information previously transmitted for determining the carrier configuration information; or a change occurs in carrier configuration of a communication link, other than the first sidelink, used by the second terminal device.

In a possible implementation, the carrier configuration information is determined by the network device.

In a possible implementation, the first terminal device is within coverage of the network device, and/or a resource allocation mode of the first terminal device includes a mode 1.

In a possible implementation, the second terminal device is within coverage of the network device, and the foregoing terminal device further includes: a second transmitting unit, configured to transmit the carrier configuration information to the network device.

In a possible implementation, the receiving unit is further configured to: receive first indication information transmitted by the network device, where the first indication information is used to instruct the second terminal device to accept part or all of configuration information in the carrier configuration information, or the first indication information is used to instruct the second terminal device to reject part or all of configuration information in the carrier configuration information.

In a possible implementation, in a case that the second terminal device rejects part or all of the configuration information in the carrier configuration information, the first terminal device performs one or more of the following operations: determining that a radio link failure occurs on the first sidelink; disconnecting the first sidelink; reconfiguring carrier configuration information for the first sidelink; or transmitting second indication information to a network device, where the second indication information is used to indicate whether the second terminal device accepts part or all of configuration information in the carrier configuration information.

In a possible implementation, the foregoing terminal device further includes: a third transmitting unit, configured to transmit the first indication information to the first terminal device.

In a possible implementation, the first indication information is carried in a configuration complete message or configuration failure message.

In a possible implementation, the foregoing terminal device further includes: a communications unit, configured to perform communication with the first terminal device based on a carrier set, where the carrier set includes one or more of the following: a default carrier; or a carrier determined based on a configured rule of mapping between a service type and a carrier.

FIG. 14 is a schematic diagram of a network device according to an embodiment of this application. The network device 1400 shown in FIG. 14 includes a processing unit 1410.

The processing unit 1410 determines carrier configuration information for a first sidelink, where the first sidelink is a sidelink on which unicast communication is performed between a first terminal device and a second terminal device, and the carrier configuration information is used to configure a plurality of carriers for the first sidelink.

In a possible implementation, the foregoing network device further includes: a first receiving unit, configured to receive second configuration assistance information transmitted by the first terminal device, where the processing unit is further configured to determine the carrier configuration information based on the second configuration assistance information.

In a possible implementation, the second configuration assistance information is determined based on first configuration assistance information, and the first configuration assistance information is used to determine the carrier configuration information.

In a possible implementation, the first configuration assistance information includes at least one of the following: a carrier expected by the second terminal device to be configured; or a carrier supported by a terminal capability of the second terminal device.

In a possible implementation, the carrier expected by the second terminal device to be configured is determined based on at least one of the following: a carrier used on a sidelink other than the first sidelink by the second terminal device; a carrier used on an uplink by the second terminal device; a carrier used on a downlink by the second terminal device; or a carrier supported by a terminal capability of the first terminal device.

In a possible implementation, transmitting of the first configuration assistance information is triggered in one or more of following manners: periodic triggering; triggering based on an event; or triggering based on a request from the first terminal device.

In a possible implementation, the event includes one or more of the following: a change occurs in link quality of the first sidelink; a conflict occurs between the first sidelink and another communication link; a change occurs in a carrier expected by the second terminal device to be configured; no configuration assistance information used to determine the carrier configuration information has been transmitted by the second terminal device via the first sidelink; the first configuration assistance information is different from configuration assistance information previously transmitted for determining the carrier configuration information; or a change occurs in carrier configuration of a communication link, other than the first sidelink, used by the second terminal device.

In a possible implementation, the first terminal device is within coverage of the network device, and/or a resource allocation mode of the first terminal device includes a mode 1.

In a possible implementation, the second terminal device is within coverage of the network device, and the processing unit is further configured to: receive the carrier configuration information transmitted by the second terminal device, where the carrier configuration information is configured by the first terminal device.

In a possible implementation, the foregoing network device further includes: a first transmitting unit, configured to transmit first indication information to the second terminal device, where the first indication information is used to instruct the second terminal device to accept part or all of configuration information in the carrier configuration information.

In a possible implementation, the foregoing network device further includes: a second transmitting unit, configured to transmit first indication information to the second terminal device, where the first indication information is used to instruct the second terminal device to reject part or all of configuration information in the carrier configuration information.

In a possible implementation, in a case that the second terminal device rejects part or all of the configuration information in the carrier configuration information, the first terminal device performs at least one of following operations: determining that a radio link failure occurs on the first sidelink; disconnecting the first sidelink; reconfiguring carrier configuration information for the first sidelink; or transmitting second indication information to a network device, where the second indication information is used to indicate whether the second terminal device accepts part or all of configuration information in the carrier configuration information.

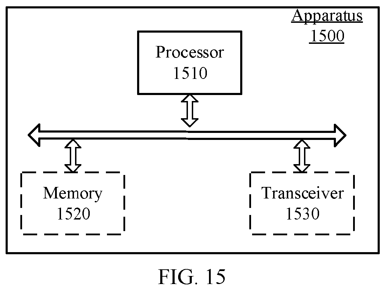

In an optional embodiment, the transmitting unit 1210 may be a transceiver 1540. The terminal device 1200 may further include a processor 1510 and a memory 1520, as shown in FIG. 15.

In an optional embodiment, the receiving unit 1310 may be the transceiver 1540. The terminal device 1300 may further include a processor 1510 and a memory 1520, as shown in FIG. 15.

In an optional embodiment, the processing unit 1420 may be a processor 1510. The network device 1400 may further include a transceiver 1530 and a memory 1520. Details are shown in FIG. 15.

FIG. 15 is a schematic diagram of a structure of a communications apparatus according to an embodiment of this application. The dashed lines in FIG. 15 indicate that the unit or module is optional. The apparatus 1500 may be configured to implement the method described in the foregoing method embodiments. The apparatus 1500 may be a chip, a terminal device, or a network device.

The apparatus 1500 may include one or more processors 1510. The processor 1510 may allow the apparatus 1500 to implement the method described in the foregoing method embodiments. The processor 1510 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

The apparatus 1500 may further include one or more memories 1520. The memory 1520 stores a program that may be executed by the processor 1510 to cause the processor 1510 to perform the method described in the foregoing method embodiments. The memory 1520 may be separate from the processor 1510 or may be integrated into the processor 1510.

The apparatus 1500 may further include a transceiver 1530. The processor 1510 may communicate with another device or chip through a transceiver 1530. For example, the processor 1510 may transmit data to and receive data from the another device or chip through the transceiver 1530.

An embodiment of this application further provides a computer-readable storage medium for storing a program. The computer-readable storage medium may be applied to the terminal or the network device provided in embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods performed by the terminal or the network device in various embodiments of this application.

An embodiment of this application further provides a computer program. The computer program may be applied to the terminal or the network device provided in embodiments of this application, and the computer program causes a computer to perform the methods performed by the terminal or the network device in various embodiments of this application.

It should be understood that the "carrier" in this application may be replaced with the "carrier set", that is, the "carrier" may be configured in a "carrier set" manner, or the "carrier" may be indicated in a "carrier set" manner. For example, the carrier configuration information may be used to configure a carrier set on the first sidelink, and the carrier set includes at least two carriers.

In addition, the "carrier" in embodiments of this application may include a receive carrier and/or a transmit carrier. Correspondingly, in a case that the carrier includes a receive carrier and a transmit carrier, a configuration corresponding to the receive carrier and a configuration corresponding to the transmit carrier may be included in the carrier configuration information. The configuration corresponding to the receive carrier and the configuration corresponding to the transmit carrier may be independent configurations. Certainly, the configuration corresponding to the receive carrier and the configuration corresponding to the transmit carrier may also be comprehensively represented, or the configuration corresponding to the receive carrier and the configuration corresponding to the transmit carrier may not be independent configurations.

The terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. However, it should also be understood that, determining B based on A does not mean determining B based only on A, but instead B may be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, the "predefined" or "pre-configured" may be implemented by pre-storing corresponding code, tables, or other forms that may be used to indicate related information in devices (for example, including a terminal device and a network device), and a specific implementation thereof is not limited in this application. For example, predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objective of the solutions of the embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state disk, SSD)), or the like.

The protection scope of this application shall be subject to the protection scope of the claims.

## Claims

1. A wireless communication method, **characterized in**:
transmitting (S910), by a first terminal device to a second terminal device, carrier configuration information for a first sidelink,
wherein the first sidelink is a sidelink on which unicast communication is performed between the first terminal device and the second terminal device, and the carrier configuration information is used to configure at least two carriers for the first sidelink,
wherein the carrier configuration information is determined by a network device.

2. The method according to claim 1, wherein the method further comprises:
receiving (S1011), by the first terminal device, first configuration assistance information transmitted by the second terminal device, wherein the first configuration assistance information is used to determine the carrier configuration information.

3. The method according to claim 2, wherein the first configuration assistance information comprises:
a carrier supported by a terminal capability of the second terminal device.

4. The method according to claim 2 or 3, wherein transmitting of the first configuration assistance information is triggered based on a request from the first terminal device.

5. The method according to claim 1, wherein the method further comprises:
transmitting (S1012), by the first terminal device, second configuration assistance information to the network device, wherein the second configuration assistance information is used to indicate first configuration assistance information, and the first configuration assistance information is used to determine the carrier configuration information.

6. The method according to any one of claims 1 to 5, wherein the method further comprises:
receiving, by the first terminal device, the carrier configuration information transmitted by the network device.

7. A wireless communication method, **characterized in**:
receiving (S910), by a second terminal device, carrier configuration information transmitted by a first terminal device for a first sidelink,
wherein the first sidelink is a sidelink on which unicast communication is performed between the first terminal device and the second terminal device, and the carrier configuration information is used to configure at least two carriers for the first sidelink,
wherein the carrier configuration information is determined by a network device.

8. The method according to claim 7, wherein the method further comprises:
transmitting (S1010), by the second terminal device, first configuration assistance information to the first terminal device, wherein the first configuration assistance information is used to determine the carrier configuration information.

9. The method according to claim 8, wherein the first configuration assistance information comprises:
a carrier supported by a terminal capability of the second terminal device.

10. A wireless communication method, **characterized in**:
determining, by a network device, carrier configuration information for a first sidelink,
wherein the first sidelink is a sidelink on which unicast communication is performed between a first terminal device and a second terminal device, and the carrier configuration information is used to configure a plurality of carriers for the first sidelink and is transmitted by the first terminal device to the second terminal device.

11. The method according to claim 10, wherein the method further comprises:
receiving (S1012), by the network device, second configuration assistance information transmitted by the first terminal device; and
the determining, by a network device, carrier configuration information comprises:
determining (S1013), by the network device, the carrier configuration information based on the second configuration assistance information.

12. The method according to claim 11, wherein the second configuration assistance information is determined based on first configuration assistance information, and the first configuration assistance information is used to determine the carrier configuration information.

13. A terminal device, comprising a memory (1520) and a processor (1510), wherein the memory (1520) is configured to store a program, and the processor (1510) is configured to invoke the program in the memory (1520), to cause the terminal device to execute the method according to any one of claims 1 to 9.

14. A network device, comprising a memory (1520) and a processor (1510), wherein the memory (1520) is configured to store a program, and the processor (1510) is configured to invoke the program in the memory (1520), to cause the network device to execute the method according to any one of claims 10 to 12.

## Patentansprüche

1. Drahtloses Kommunikationsverfahren, **gekennzeichnet durch**:
Übertragen (S910) durch eine erste Endgerätvorrichtung an eine zweite Endgerätvorrichtung von Trägerkonfigurationsinformationen für einen ersten Sidelink,
wobei der erste Sidelink ein Sidelink ist, auf dem eine Unicast-Kommunikation zwischen der ersten Endgerätvorrichtung und der zweiten Endgerätvorrichtung durchgeführt wird, und die Trägerkonfigurationsinformationen dazu verwendet werden, mindestens zwei Träger für den ersten Sidelink zu konfigurieren,
wobei die Trägerkonfigurationsinformationen von einer Netzwerkvorrichtung bestimmt werden.

2. Verfahren nach Anspruch 1, wobei das Verfahren weiter umfasst:
Empfangen (S1011), durch die erste Endgerätvorrichtung, erster Konfigurationsunterstützungsinformationen, die von der zweiten Endgerätvorrichtung übertragen werden, wobei die ersten Konfigurationsunterstützungsinformationen verwendet werden, um die Trägerkonfigurationsinformationen zu bestimmen.

3. Verfahren nach Anspruch 2, wobei die ersten Konfigurationsunterstützungsinformationen umfassen:
einen Träger, der durch eine Endgerätfähigkeit der zweiten Endgerätvorrichtung unterstützt wird.

4. Verfahren nach Anspruch 2 oder 3, wobei das Übertragen der ersten Konfigurationsunterstützungsinformationen auf der Grundlage einer Anforderung der ersten Endgerätvorrichtung ausgelöst wird.

5. Verfahren nach Anspruch 1, wobei das Verfahren weiter umfasst:
Übertragen (S1012), durch die erste Endgerätvorrichtung, von zweiten Konfigurationsunterstützungsinformationen an die Netzwerkvorrichtung, wobei die zweiten Konfigurationsunterstützungsinformationen verwendet werden, um erste Konfigurationsunterstützungsinformationen anzuzeigen, und die ersten Konfigurationsunterstützungsinformationen verwendet werden, um die Trägerkonfigurationsinformationen zu bestimmen.

6. Verfahren nach einem der Ansprüche 1 bis 5, wobei das Verfahren weiter umfasst:
Empfangen, durch die erste Endgerätvorrichtung, der von der Netzwerkvorrichtung übertragenen Trägerkonfigurationsinformationen.

7. Drahtloses Kommunikationsverfahren, **gekennzeichnet durch**:
Empfangen (S910), durch eine zweite Endgerätvorrichtung, von Trägerkonfigurationsinformationen, die von einer ersten Endgerätvorrichtung für einen ersten Sidelink übertragen wurden,
wobei der erste Sidelink ein Sidelink ist, auf dem eine Unicast-Kommunikation zwischen der ersten Endgerätvorrichtung und der zweiten Endgerätvorrichtung durchgeführt wird, und die Trägerkonfigurationsinformationen dazu verwendet werden, mindestens zwei Träger für den ersten Sidelink zu konfigurieren,
wobei die Trägerkonfigurationsinformationen von einer Netzwerkvorrichtung bestimmt werden.

8. Verfahren nach Anspruch 7, wobei das Verfahren weiter umfasst:
Übertragen (S1010), durch die zweite Endgerätvorrichtung, von ersten Konfigurationsunterstützungsinformationen an die erste Endgerätvorrichtung, wobei die ersten Konfigurationsunterstützungsinformationen verwendet werden, um die Trägerkonfigurationsinformationen zu bestimmen.

9. Verfahren nach Anspruch 8, wobei die ersten Konfigurationsunterstützungsinformationen umfassen:
einen Träger, der durch eine Endgerätfähigkeit der zweiten Endgerätvorrichtung unterstützt wird.

10. Drahtloses Kommunikationsverfahren, **gekennzeichnet durch**:
Bestimmen, durch eine Netzwerkvorrichtung, von Trägerkonfigurationsinformationen für einen ersten Sidelink,
wobei der erste Sidelink ein Sidelink ist, auf dem eine Unicast-Kommunikation zwischen einer ersten Endgerätvorrichtung und einer zweiten Endgerätvorrichtung durchgeführt wird, und die Trägerkonfigurationsinformationen dazu verwendet werden, um eine Vielzahl von Trägern für den ersten Sidelink zu konfigurieren, und von der ersten Endgerätvorrichtung an die zweite Endgerätvorrichtung übertragen werden.

11. Verfahren nach Anspruch 10, wobei das Verfahren weiter umfasst:
Empfangen (S1012), durch die Netzwerkvorrichtung, von zweiten Konfigurationsunterstützungsinformationen, die von der ersten Endgerätvorrichtung übertragen wurden; und
das Bestimmen, durch eine Netzwerkvorrichtung, von Trägerkonfigurationsinformationen umfasst:
Bestimmen (S1013), durch die Netzwerkvorrichtung, der Trägerkonfigurationsinformationen auf der Grundlage der zweiten Konfigurationsunterstützungsinformationen.

12. Verfahren nach Anspruch 11, wobei die zweiten Konfigurationsunterstützungsinformationen auf der Grundlage der ersten Konfigurationsunterstützungsinformationen bestimmt werden und die ersten Konfigurationsunterstützungsinformationen verwendet werden, um die Trägerkonfigurationsinformationen zu bestimmen.

13. Endgerätvorrichtung, umfassend einen Speicher (1520) und einen Prozessor (1510), wobei der Speicher (1520) konfiguriert ist, um ein Programm zu speichern, und der Prozessor (1510) konfiguriert ist, das Programm im Speicher (1520) aufzurufen, um zu bewirken, dass die Endgerätvorrichtung das Verfahren nach einem der Ansprüche 1 bis 9 ausführt.

14. Netzwerkvorrichtung, umfassend einen Speicher (1520) und einen Prozessor (1510), wobei der Speicher (1520) konfiguriert ist, um ein Programm zu speichern, und der Prozessor (1510) konfiguriert ist, das Programm im Speicher (1520) aufzurufen, um zu bewirken, dass die Netzwerkvorrichtung das Verfahren nach einem der Ansprüche 10 bis 12 ausführt.

## Revendications

1. Procédé de communication sans fil, **caractérisé par** :
la transmission (S910), par un premier dispositif terminal vers un second terminal, d'informations de configuration de porteuse pour une première liaison latérale,
dans lequel la première liaison latérale est une liaison latérale sur laquelle une communication monodiffusion est réalisée entre le premier dispositif terminal et le second dispositif terminal, et les informations de configuration de porteuse sont utilisées pour configurer au moins deux porteuses pour la première liaison latérale,
dans lequel les informations de configuration de porteuse sont déterminées par un dispositif réseau.

2. Procédé selon la revendication 1, dans lequel le procédé comprend en outre :
la réception (S1011), par le premier dispositif terminal, de premières informations d'assistance de configuration transmises par le second dispositif terminal, dans lequel les premières informations d'assistance de configuration sont utilisées pour déterminer les informations de configuration de porteuse.

3. Procédé selon la revendication 2, dans lequel les premières informations d'assistance de configuration comprennent :
une porteuse prise en charge par une capacité terminale du second dispositif terminal.

4. Procédé selon la revendication 2 ou 3, dans lequel la transmission des premières informations d'assistance de configuration est déclenchée sur la base d'une demande à partir du premier dispositif terminal.

5. Procédé selon la revendication 1, dans lequel le procédé comprend en outre :
la transmission (S1012), par le premier dispositif terminal, de secondes informations d'assistance de configuration au dispositif réseau, dans lesquelles les secondes informations d'assistance de configuration sont utilisées pour indiquer de premières informations d'assistance de configuration, et les premières informations d'assistance de configuration sont utilisées pour déterminer les informations de configuration de porteuse.

6. Procédé selon l'une quelconque des revendications 1 à 5, dans lequel le procédé comprend en outre :
la réception, par le premier dispositif terminal, des informations de configuration de porteuse transmises par le dispositif réseau.

7. Procédé de communication sans fil, **caractérisé par** :
la réception (S910), par un second dispositif terminal, d'informations de configuration de porteuse transmises par un premier dispositif terminal pour une première liaison latérale,
dans lequel la première liaison latérale est une liaison latérale sur laquelle une communication monodiffusion est réalisée entre le premier dispositif terminal et le second dispositif terminal, et les informations de configuration de porteuse sont utilisées pour configurer au moins deux porteuses pour la première liaison latérale,
dans lequel les informations de configuration de porteuse sont déterminées par un dispositif réseau.

8. Procédé selon la revendication 7, dans lequel le procédé comprend en outre :
la transmission (S1010), par le second dispositif terminal, de premières informations d'assistance de configuration au premier dispositif terminal, dans lequel les premières informations d'assistance de configuration sont utilisées pour déterminer les informations de configuration de porteuse.

9. Procédé selon la revendication 8, dans lequel les premières informations d'assistance de configuration comprennent :
une porteuse prise en charge par une capacité terminale du second dispositif terminal.

10. Procédé de communication sans fil, **caractérisé par** :
la détermination, par un dispositif réseau, d'informations de configuration de porteuse pour une première liaison latérale,
dans lequel la première liaison latérale est une liaison latérale sur laquelle une communication monodiffusion est réalisée entre un premier dispositif terminal et un second dispositif terminal, et les informations de configuration de porteuse sont utilisées pour configurer une pluralité de porteuses pour la première liaison latérale et sont transmises par le premier dispositif terminal au second dispositif terminal.

11. Procédé selon la revendication 10, dans lequel le procédé comprend en outre :
la réception (S1012), par le dispositif réseau, de secondes informations d'assistance de configuration transmises par le premier dispositif terminal ; et
la détermination, par un dispositif réseau, d'informations de configuration de porteuse comprend :
la détermination (S1013), par le dispositif réseau, des informations de configuration de porteuse sur la base des secondes informations d'assistance de configuration.

12. Procédé selon la revendication 11, dans lequel les secondes informations d'assistance de configuration sont déterminées sur la base de premières informations d'assistance de configuration, et les premières informations d'assistance de configuration sont utilisées pour déterminer les informations de configuration de porteuse.

13. Dispositif terminal, comprenant une mémoire (1520) et un processeur (1510), dans lequel la mémoire (1520) est configurée pour stocker un programme, et le processeur (1510) est configuré pour invoquer le programme dans la mémoire (1520), pour amener le dispositif terminal à exécuter le procédé selon l'une quelconque des revendications 1 à 9.

14. Dispositif terminal, comprenant une mémoire (1520) et un processeur (1510), dans lequel la mémoire (1520) est configurée pour stocker un programme et le processeur (1510) est configuré pour invoquer le programme dans la mémoire (1520) pour amener le dispositif réseau à exécuter le procédé selon l'une quelconque des revendications 10 à 12.
